# EUROPEAN PATENT APPLICATION

(11) **EP 4 417 811 A1**
(43) Date of publication of application: **21.08.2024**
(21) Application number: 23177914.1
(22) Date of filing: 07.06.2023
(51) Int. Cl.: F03D 3/02, F03D 3/06

(54) **WIND TURBINE ROTOR, WIND TURBINE APPARATUS AND METHOD FOR MANUFACTURING THE ROTOR**

(30) Priority: 17.02.2023 PL 44382523
(71) Applicant: VP System Sp z o.o., 50-020 Wroclaw (PL)
(72) Inventor: Juszko, Rafal, 50-241 Wroclaw (PL); Gruszka, Tomasz, 54-007 Wroclaw (PL); Zemlak, Arkadiusz, 55-011 Siechnice (PL); Zajdel, Jakub, 01-793 Warszawa (PL)
(74) Representative: JWP Patent & Trademark Attorneys

(57) **Abstract**

The subject-matter of the invention is a wind turbine rotor (1) with a vertical axis of rotation, the rotor comprising a plurality of rotor blades (2) defining the side wall of the rotor (1), wherein the rotor blades have a longitudinal shape and are equally spaced from one another, wherein the windward surface (3) of the blade (2) extends from the trailing edge (5) of the previous blade (2) to the leading edge (6) of the current blade (2), the leeward surface (4) of the blade (2) extends from the leading edge (6) of the current blade (2) to the trailing edge (5) of the current blade (2), characterised in that the side wall, as defined by the wind turbine rotor (1) blades (2), is a uniform, longitudinal structure, whose cross-section is essentially annular and defines an enclosed inner space (14) of the wind turbine rotor (1). The second subject-matter of the invention is a wind turbine rotor (1) module comprising the wind turbine rotor (1) of the invention. The third subject-matter of the invention is a wind panel comprising at least three wind turbine rotor (1) modules of the invention. Another subject-matter of the invention is a method for manufacturing the wind turbine rotor (1) of the invention.

## Description

The subject-matter of the invention is a wind turbine rotor, wind turbine rotor module, wind panel with the wind turbine rotor module and a method for manufacturing the wind turbine rotor to be used in converting the kinetic energy of the wind, particularly low-speed wind, into electrical energy In addition, the invention can be used as a fence for a property, road or urban space. It can be installed on the roofs of buildings and wherever it is possible to convert wind energy into electrical energy.

Obtaining electrical energy from renewable energy sources is currently a very important element of the energy management. So-called "clean energy sources" such as the sun, wind, water (rivers, tides and sea waves) or geothermal energy are particularly important because their resources are renewed in a relatively short period of time and their use is not harmful to the environment. However, environmental conditions in different parts of the world are not always favourable enough to freely use renewable energy sources. In the case of wind, a common obstacle is its low speeds, which are difficult to use effectively for electrical energy production. This is because converting low wind speeds into electrical energy is associated with the need to increase the active area of the wind turbine. Increasing the surface of a wind turbine, on the other hand, increases the cost of its manufacture.

In the prior art, wind turbines are known to convert low-speed wind kinetic energy into electrical energy. However, such wind turbines have a relatively small working surface and their manufacture is a long and complicated process. In addition, the efficiency of this type of devices is low, which often makes their use uneconomic.

US patent document US8912679B2 discloses a modular wind turbine system with electrically conductive structural rails supporting wind turbines. The wind turbines drive electric generators, which are connected to two parallel rails at their upper and lower ends Individual modules are electrically and mechanically linked to adjacent modules. Electrical energy generated by the generators is conveyed to a location where it is consumed or for onward transmission. Wind turbines are an elongated strip with a vertical axis of rotation. The wind turbine system is mounted on a frame at a certain level above the surface of the ground.

Spanish patent document ES1249377U relates to a wind panel to use wind power to produce electrical energy. The disclosed panel comprises a number of cone-shaped wind rotors that are wind-driven. The rotors are aligned side by side in a straight or zig-zag line. Each rotor is connected to the alternator and is seated on a support plate perpendicular to the axis of the rotors. The system is a cuboid-shaped structure with two spaces. The upper one is for the rotors and is equipped with holes to receive the wind, while the lower one is for the alternators.

US patent document US8536720B2 describes wind energy apparatus, made up of a plurality of modular wind energy devices or units. Each unit has a housing and at least two turbines mounted on the housing. Each of the turbines has a blade set having a vertical axis and extending upward from the housing. Generators are disposed in the housing and connected to the turbines accordingly. The units, when placed together, connect their poles (positive and negative), together completing a circuit.

US patent document US20180171981A1 discloses integrated modular wind turbine, which can operate at high and low wind speeds. Individual modules of the wind turbines are arranged horizontally-oriented or vertically-oriented. The module of that invention comprises two circular, non-rotatable stators, two circular rotors, with at least one magnet affixed to each rotor, and a plurality of turbine blades. Turbine blades are curved planes, which are attached to the rotors with their ends. The rotors which contain magnets rotate around the central axis of the module in proximity to the conducting coils, creating a rotating magnetic field. Thus, each module of the wind turbine generates electrical energy.

The invention is intended to solve the technical problem behind it by providing a wind turbine rotor, a wind turbine module and a wind panel, which will make it possible to effectively convert low-speed (1 - 4 m/s) wind energy into electrical energy. Moreover, it is desirable that the wind turbine rotor, the wind turbine module and the wind panel have a durable structure and are weather-resistant. It is also desirable that the material of which the wind turbine rotor is made is widely available and its acquisition does not involve high financial outlays. In addition, it is desirable for the wind panel to be an environmentally friendly device and to convert energy from renewable energy sources into electrical energy as effectively as possible. It is also desirable that the operation of the wind turbine rotor, the wind turbine module and the wind panel is safe and does not adversely affect the functioning of humans so that these elements can be mounted in urban space. In addition, it is desirable that the method for manufacturing the wind turbine rotor does not require high financial outlays, is fast and uncomplicated.

The first subject-matter of the invention is a wind turbine rotor with a vertical axis of rotation, the rotor comprising a plurality of rotor blades defining the side wall of the rotor, wherein the rotor blades have a longitudinal shape and are equally spaced from one another, wherein the windward surface of the blade extends from the trailing edge of the previous blade to the leading edge of the current blade, the leeward surface of the blade extends from the leading edge of the current blade to the trailing edge of the current blade, characterised in that the side wall, as defined by the wind turbine rotor blades, is a uniform, longitudinal structure, whose cross-section is essentially annular and defines an enclosed inner space of the wind turbine rotor.

Preferably, the wind turbine rotor has a lid that tightly closes its upper end.

More preferably, the windward surface of the blade and/or the leeward surface of the blade is a flat, convex or concave surface.

Equally preferably, the number of blades of the wind turbine rotor is defined by a ratio of 0.4-1.1 blade per each 10 mm of the diameter of the wind turbine rotor.

Preferably, the leading edge of the blade is located within a distance in the range 0.55 - 0.82 of the diameter length of the wind turbine rotor from the vertical central axis of the turbine rotor.

More preferably, the height of the wind turbine rotor is 10 - 40 times the length of its diameter.

Equally preferably, the wind turbine rotor is made of plastic, a mixture of plastic and secondary plastic or aluminium.

Even more preferably, the side wall of the wind turbine rotor is coated with monocrystalline silicon, polycrystalline silicon or perovskite.

Preferably, at least part of the inner space of the wind turbine rotor is filled with an insulating material in the form of polyurethane, polyethylene or a mixture thereof.

The second subject-matter of the invention is a wind turbine rotor module characterised in that it comprises the wind turbine rotor of the invention, wherein a generator, seated on a fixed turbine shaft, a lower inner bearing, for ensuring rotation of the rotor around the fixed turbine shaft, and an upper inner bearing, arranged on the fixed turbine shaft in the area from half the height of the fixed turbine shaft to its upper end, are arranged in the inner space of the wind turbine rotor.

The third subject-matter of the invention is a wind panel characterised in that it comprises at least three wind turbine rotor modules of the invention, wherein the modules are seated on a lower support rail.

Preferably, the wind turbine rotor module is connected to the lower support rail via the fixed turbine shaft.

More preferably, the wind panel comprises an upper support rail, with the upper inner bearing being attached to the upper support rail.

The fourth subject-matter of the invention is a method for manufacturing the wind turbine rotor of the invention, characterised in that it comprises the steps of:
a) raw material is delivered to the extruder,
b) the raw material is heated to obtain the plastic state of the material,
c) the plastic material is pushed through the mould,
d) the obtained profiles are cut.

Preferably, after step d), a step of tightly closing the upper end of the wind turbine rotor with a lid is conducted.

Preferably, the raw material is plastic, a mixture of plastic and secondary plastic or aluminium.

More preferably, the amount of secondary plastic is at least 30% of the total amount of the material.

Even more preferably, the plastic is PVC, PP and/or PE.

The wind turbine rotor, the wind turbine rotor module and the wind panel make it possible to effectively convert low-speed wind energy into electrical energy. No free spaces between the rotor blades means that the wind strikes directly the windward surface of the blade so that more wind energy is used than in standard wind turbine rotors. Such a rotor structure provides an increased active surface of the device compared to the solutions known in the prior art. In the wind panel of the invention, the air stream flows between the rotors (and not between the free spaces between the blades), thus increasing its speed and at the same time ensuring more efficient operation of the device. In addition, the side wall of the rotor is coated with a material that converts solar or thermal energy into electrical energy, making the effectiveness of the device even higher. Because of the small diameter of the rotor, the rotor blades achieve relatively low angular velocities, and as a result, the rotor operation is quiet and free from flickering. This means that the operation of the wind turbine rotor does not cause the effect that the blades cast shadows, which, at high frequencies, can be very disturbing to humans. Furthermore, by filling the inner space of the rotor with an insulating material, the sound emitted by the device is additionally limited. The operation of the wind turbine rotor, the wind turbine rotor module and the wind panel is therefore silent and does not affect human functioning, and so it possible to mount the devices in urban space. Moreover, in urban space, the wind panel can be used as a fence.

Placing the components of the rotary mechanism inside the rotor increases the durability of the rotor module and improves the resistance to external conditions. Mounting the wind turbine rotor on a single, stationary turbine shaft ensures that the rotor is held firmly and permanently in its intended location. With a flexible printed circuit board (PCB flex) used to construct the generator stator of the rotor module, the generator is more resistant and can achieve higher rotational speeds. Placing the generator inside the wind turbine rotor makes it possible for the individual rotor modules in the wind panel to work independently. In addition, the wind turbine rotor module has a low weight, which makes it possible to bear it by means of slide bearings, which further extends the life of the device. Moreover, because of the low weight of the device, any accidental touching of the wind turbine rotor blades while in operation causes the rotor to stop and is not dangerous. The individual modules of the wind panel are arranged on one support rail, with the stability of the structure being maintained, which reduces the workload and costs of manufacturing the wind panel. Additionally, with only one support rail used, the wind panel modules can absorb the impact of an animal, for example, by deflecting and then returning to the working position without damage to the structure and without harm to the animal. In addition, attaching the wind panel to the ground or a building foundation ensures that it is stably positioned.

The manufacture of the wind turbine rotor is carried out in the extrusion process, using commonly available plastics, which ensures that the method for manufacturing the rotor does not require high financial outlays, is fast and easy, and the rotor thus manufactured is characterised by high durability to mechanical damage and weather conditions. In addition, the rotor material can also be a mixture of plastic and secondary plastic or other waste materials, which further reduces manufacturing costs.

The solution according to the invention is presented in the following embodiments and is illustrated in the drawing, in which Fig. 1A shows the wind turbine rotor in an axonometric view, Fig. 1B shows a cross-section of the wind turbine rotor of Fig. 1A, Fig. 2 shows a structure diagram of the wind turbine rotor module, Fig. 3 shows an exploded view of the wind panel according to the third embodiment, Fig. 4 shows the wind panel according to the fourth embodiment, Fig. 5 shows a cross-section of an alternative embodiment of a wind turbine rotor where the windward surface of the blade and the leeward surface of the blade are convex su rfaces.

### Example 1

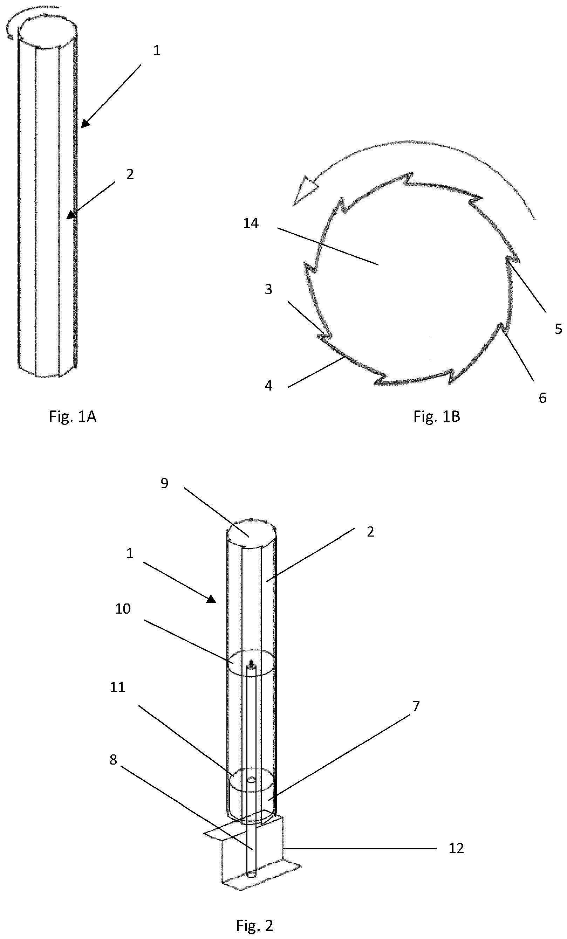

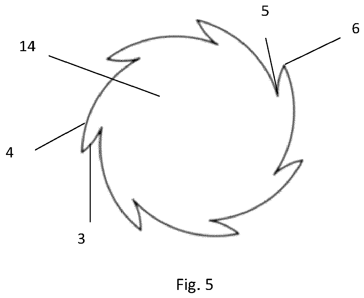

The first embodiment of the wind turbine rotor 1 according to the present invention is illustrated in a schematic view in Fig. 1A, Fig. 1B. As shown in the figures, the wind turbine rotor 1 comprises a plurality of rotor blades 2 defining the side wall of the wind turbine rotor 1, the rotor blades 2 having a longitudinal shape and being equally spaced from one another. The turbine blade 2 has a windward surface 3 and a leeward surface 4. The windward surface 3 extends from the trailing edge 5 of the previous blade 2 to the leading edge 6 of the current blade 2. The leeward surface 4 extends from the leading edge 6 of the current blade 2 to the trailing edge 5 of the current blade 2. In the present embodiment, the windward surface 3 of the blade 2 is a flat surface and the leeward surface 4 of the blade 2 is a convex surface, which, however, does not limit the invention, and in alternative embodiments, these surfaces can be flat, convex or concave, provided that the basic functionality of the wind turbine rotor 1 is maintained, i.e. the effective use of low-speed wind energy. One of the alternative embodiments of the wind turbine rotor 1 of the present invention is shown in a cross-section in Fig. 5, where both the leeward surface 4 of the blade 2 and the windward surface 3 of the blade 2 are convex surfaces. The wind turbine rotor 1 has a cylinder-like shape, and its cross-section is substantially annular as shown in Fig. 1B such that the side wall of the wind turbine rotor 1 defines the inner space 14 of the wind turbine rotor 1. The upper end of the wind turbine rotor 1 is closed with a lid 9.

In this embodiment, the wind turbine rotor 1 has a diameter of 11.5 cm and a side wall thickness of 3 mm. The diameter of the wind turbine rotor 1 is the diameter of the circle circumscribed around the annular cross-section of the wind turbine rotor 1. The height of the wind turbine rotor 1 is 200 cm. The wind turbine rotor 1 has nine blades 2 and the leading edge 6 of each of the blades 2 is at a distance of 7 cm from the vertical central axis of the wind turbine rotor 1. The distance between the leading edge 6 and the vertical central axis of the wind turbine rotor 1 does not limit the invention, and in alternative embodiments, it can be longer or shorter, provided that the distance between the leading edge 6 of the blade 2 and the vertical central axis of the wind turbine rotor 1 is in the range of 0.55 - 0.82 of the diameter length of the wind turbine rotor 1. The number of blades 2 of the rotor 1 does not limit the invention and in alternative embodiments, it can be greater or smaller provided that the number of blades 2 of the wind turbine rotor 1 is defined by a ratio of 0.4-1.1 blade 2 per each 10 mm of the diameter of the wind turbine rotor 1. The height of the wind turbine rotor 1 does not limit the invention and in alternative embodiments, it can reach a lower or higher value, provided that it is in the range of 10 - 40 times the diameter length of the wind turbine rotor 1.

The wind turbine rotor 1 according to the first embodiment rotates at a speed of 50 revolutions per minute at a wind speed of 1 m/s. Importantly, the parameters with regard to the diameter, thickness of the side wall, and rotational speed of the wind turbine rotor 1 do not limit the invention and in alternative embodiments, they can reach lower or higher values, provided that the effective conversion of low-speed wind energy into electrical energy is maintained.

The method for manufacturing the wind turbine rotor 1 is carried out in the following steps. First, raw material is supplied to the extruder and heated to obtain the plastic state of the material. Then, the plastic material is pushed through a suitable mould. The profile thus obtained is cut to form shorter elements being the wind turbine rotors 1. Then, the upper end of the wind turbine rotor 1 is tightly closed with a lid 9. Importantly, the side wall of the wind turbine rotor 1 thus made has no connection point, as it is a uniform element. In this embodiment, the raw material is poly(vinyl chloride).

### Example 2

An embodiment of the wind turbine rotor 1 module according to the invention is shown in Fig. 2. The wind turbine rotor 1 module comprises the wind turbine rotor 1 according to the first embodiment and rotary mechanism components that are located in the inner space 14 of the wind turbine rotor 1. Generally, the structure of the wind turbine rotor 1 and the method for manufacturing said rotor are substantially similar to the structure of and method for manufacturing the wind turbine rotor 1 presented in Example 1, therefore, the similar structure elements and steps of the method will not be repeated for the sake of clarity of the disclosure. In this embodiment, the thickness of the side wall of the rotor 1 is 2 mm and the outer surface of the side wall is additionally coated with a material that converts solar energy into thermal energy, the material being monocrystalline silicon. The type of material that the side wall of the rotor 1 is coated with does not limit the invention and in alternative embodiments, this material can be any other material that converts solar energy into thermal energy, e.g. polycrystalline silicon or perovskite. Additionally, the inner space 14 of the wind turbine rotor 1 is filled with an insulating material in the form of a polyurethane foam. However, the type of insulating material does not limit the invention and in alternative embodiments, this material can be any other material, e.g. polyethylene, provided that the functionality of limiting the noise emitted by the wind turbine rotor 1 module is maintained.

The components of the rotary mechanism are located in the inner space of the wind turbine rotor 1 and include a generator 7, a fixed turbine shaft 8, a lower inner bearing 11 and an upper inner bearing 10. The generator 7 is seated on the fixed turbine shaft 8, which is arranged in the vertical axis of the wind turbine rotor 1. On the top surface of the generator 7, a lower inner bearing 11 is arranged to ensure rotation of the wind turbine rotor 1 around the fixed turbine shaft 8. The upper inner bearing 10 is arranged at the end of the fixed turbine shaft 8 at half the hight of the wind turbine rotor 1.

The generator 7 comprises a rotor and a stator. The generator 7 rotor is a resin cast element, while the stator is a flex PCB. The material of which the generator 7 rotor is made does not limit the invention and in alternative embodiments, it can be an adhesive, a polymer or a mixture of ferrite powder (iron oxide) and a binder such as a resin, adhesives or other polymers, provided that the treatment of the rotor material is low in energy. In this embodiment, the wind turbine rotor 1 is made of a mixture of plastic (polypropylene) and secondary plastic in the amount of 30 wt% of the mixture. The amount of plastic does not limit the invention and in alternative embodiments, it can be higher, provided that the structure of the wind turbine rotor 1 is durable and resistant to weather conditions.

### Example 3

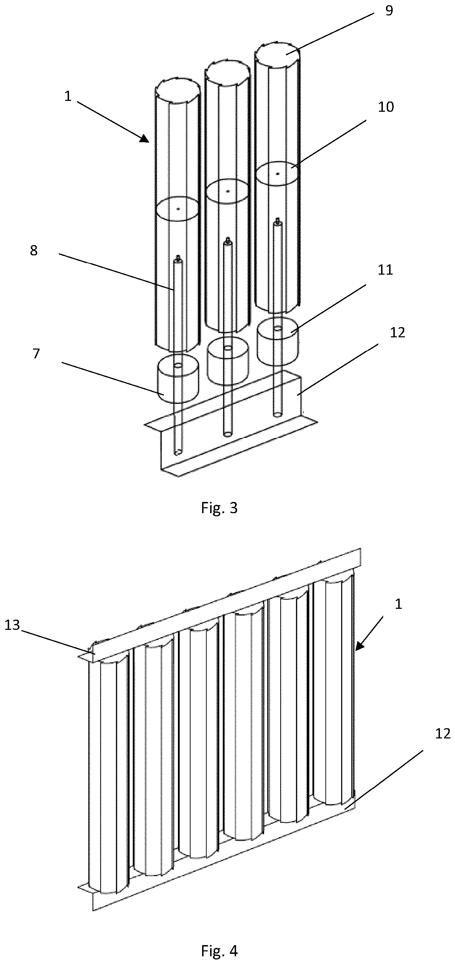

An embodiment of the wind panel according to the invention is shown in Fig. 3. The wind panel according to the third embodiment comprises three wind turbine rotor 1 modules of the invention, which are seated on a lower support rail 12 in a line one next to the other at intervals of 2 cm. It should be emphasised that the distances between the individual rotor 1 modules arranged on the support rail 12 do not limit the invention and in alternative embodiments they can be shorter or longer, provided that the effective conversion of low-speed wind energy into electrical energy is maintained. Generally, the structure of the wind turbine rotor 1 module is substantially similar to the structure of the wind turbine rotor 1 module presented in Example 2, therefore, the similar structure elements will not be repeated for the sake of clarity of the disclosure.

In this embodiment, the wind turbine rotor 1 modules are attached to the lower support rail 12 via corresponding fixed turbine shafts 8. Additionally, an electrical installation, with cable trays connecting successive generators 7 of the modules, is placed in the lower support rail 12.

### Example 4

Another embodiment of the wind panel according to the invention is shown in Fig. 4. Generally, the structure of the wind panel according to the fourth embodiment is broadly similar to the structure of the wind panel presented in the third example, which is why similar structural elements will not be repeated for the sake of clarity of the disclosure.

In this embodiment, the wind panel comprises six wind turbine rotor 1 modules that are arranged on the lower support rail 12 one next to the other at a distance of 3 cm from each other, wherein the wind panel further has an upper support rail 13. The wind turbine rotor 1 modules are attached to the upper support rail 13 via the upper inner bearing 10, which, in this embodiment, is located at the upper end of each of the wind turbine rotor 1 modules. The fixed turbine shaft 8 extends to a height of 10 cm.

### List of reference signs:

- 1 -: wind turbine rotor,
- 2 -: rotor blade,
- 3 -: windward surface,
- 4 -: leeward surface,
- 5 -: trailing edge,
- 6 -: leading edge,
- 7 -: generator,
- 8 -: turbine shaft,
- 9-: lid,
- 10 -: upper inner bearing,
- 11 -: lower inner bearing,
- 12 -: lower support rail,
- 13 -: upper support rail,
- 14 -: inner space.

## Claims

1. A wind turbine rotor (1) with a vertical axis of rotation, the rotor comprising a plurality of rotor blades (2) defining the side wall of the rotor (1), wherein the rotor blades have a longitudinal shape and are equally spaced from one another, wherein the windward surface (3) of the blade (2) extends from the trailing edge (5) of the previous blade (2) to the leading edge (6) of the current blade (2), the leeward surface (4) of the blade (2) extends from the leading edge (6) of the current blade (2) to the trailing edge (5) of the current blade (2), **characterised in that** the side wall, as defined by the wind turbine rotor (1) blades (2), is a uniform, longitudinal structure, whose cross-section is essentially annular and defines an enclosed inner space (14) of the wind turbine rotor (1).

2. The wind turbine rotor (1) according to claim 1, **characterised in that** it has a lid (9) that tightly closes its upper end.

3. The wind turbine rotor (1) according to claim 1 or 2, **characterised in that** the windward surface (3) of the blade (2) and/or the leeward surface (4) of the blade (2) is a flat, convex or concave surface.

4. The wind turbine rotor (1) according to any of claims 1 to 3, **characterised in that** the number of blades (2) of the wind turbine rotor (1) is defined by a ratio of 0.4-1.1 blade (2) per each 10 mm of the diameter of the wind turbine rotor (1).

5. The wind turbine rotor (1) according to any of claims 1 to 4, **characterised in that** the leading edge (6) of the blade (2) is located within a distance in the range 0.55 - 0.82 of the diameter length of the wind turbine rotor (1) from the vertical central axis of the turbine rotor (1).

6. The wind turbine rotor (1) according to any of claims 1 to 5, **characterised in that** the height of the wind turbine rotor (1) is 10 - 40 times the length of its diameter.

7. The wind turbine rotor (1) according to any of claims 1 to 6, **characterised in that** it is made of plastic, a mixture of plastic and secondary plastic or aluminium.

8. The wind turbine rotor (1) according to any of claims 1 to 7, **characterised in that** its side wall is coated with monocrystalline silicon, polycrystalline silicon or perovskite.

9. The wind turbine rotor (1) according to any of claims 1 to 8, **characterised in that** at least a portion of its inner space (14) is filled with an insulating material in the form of polyurethane, polyethylene or a mixture thereof.

10. A wind turbine rotor (1) module, **characterised in that** it comprises the wind turbine rotor (1) as defined in any of claims 1 to 9, wherein a generator (7), seated on a fixed turbine shaft (8), a lower inner bearing (11), for ensuring rotation of the rotor around the fixed turbine shaft (8), and an upper inner bearing (10), arranged on the fixed turbine shaft (8) in the area from half the height of the fixed turbine shaft (8) to its upper end, are arranged in the inner space (14) of the wind turbine rotor (1).

11. A wind panel **characterised in that** it comprises at least three wind turbine rotor (1) modules, as defined in claim 10, wherein the modules are seated on a lower support rail (12).

12. The wind panel according to claim 11, **characterised in that** the wind turbine rotor (1) module is connected to the lower support rail (12) via the fixed turbine shaft (8).

13. The wind panel according to claim 11 or 12, **characterised in that** it comprises an upper support rail (13), with the upper inner bearing (10) being attached to the upper support rail (13).

14. A method for manufacturing the wind turbine rotor (1), as defined in any of claims 1 to 9, **characterised in that** it comprises the steps of:
a) raw material is delivered to the extruder,
b) the raw material is heated to obtain the plastic state of the material,
c) the plastic material is pushed through the mould,
d) the obtained profiles are cut.

15. The method for manufacturing the wind turbine rotor (1) according to claim 14, **characterised in that,** the raw material is plastic, a mixture of plastic and secondary plastic or aluminium, preferably the amount of secondary plastic is at least 30 wt% of the total amount of the material.
